# EUROPÄISCHE PATENTSCHRIFT

(11) **EP 3 891 333 B1**
(45) Veröffentlichungstag und Bekanntmachung des Hinweises auf die Patenterteilung: **11.01.2023**
(21) Anmeldenummer: 19816235.6
(22) Anmeldetag: 29.11.2019
(51) Int. Cl.: D21F 3/08, D21F 3/02, F16C 13/00, B30B 3/00

(54) **WALZE UND HERSTELLUNGSVERFAHREN EINER WALZE**
ROLL AND METHOD FOR PRODUCING A ROLL
ROULEAU ET PROCÉDÉ DE FABRICATION D'UN ROULEAU

(30) Priorität: 04.12.2018 DE 102018130853; 11.12.2018 DE 102018131736
(43) Veröffentlichungstag der Anmeldung: 13.10.2021
(73) Patentinhaber: Andritz Küsters GmbH, 47805 Krefeld (DE)
(72) Erfinder: RAMISCH, Rolf, 83334 Inzell (DE); KOHNEN, Franz-Josef, 47918 Tönisvorst (DE); MEYER, Christian, 41751 Viersen-Dülken (DE); HÜNNEKENS, Andre, 47638 Straelen (DE)
(74) Vertreter: Kluin Patent
(86) Internationale Anmeldenummer: PCT/EP2019/083056
(87) Internationale Veröffentlichungsnummer: WO 2020/114900

(56) Entgegenhaltungen:
- WO-A1-2009/100758
- DE-A1-102012 217 413
- DE-A1-102016 114 013

## Beschreibung

Die Erfindung betrifft eine Walze zur Behandlung von Vlies-, Textil-, Kunststoff-oder Papierwarenbahnen, mit einem Walzenträger und einem um den Walzenträger rotierbaren Walzenmantel, wobei der Walzenmantel eine den arbeitenden Walzenumfang bildende äußere Umfangsfläche und eine innere Umfangsfläche aufweist. Ferner betrifft die Erfindung ein Verfahren zur Herstellung einer solchen Walze.

Derartige Walzen werden zumeist als Behandlungswalze mit einer entsprechenden Gegenwalze zur Bildung eines Behandlungsspalts auf entsprechenden Vorrichtungen zur Behandlung von Vlies-, Textil-, Kunststoff- oder Papierwarenbahnen betrieben. Dabei erstreckt sich der als Traggerüst für den Walzenmantel dienende Walzenträger typischerweise axial durch den in der Regel als Rohr ausgebildeten Walzenmantel, wobei der Walzenmantel auf dem Walzenträger um eine in Längserstreckung des Walzenmantels verlaufende Drehachse drehbar gelagert ist. Hierbei kann die innere Umfangsfläche des Walzenmantels als zumindest unterstützende Lagerung des Walzenmantels auf dem Walzenträger dienen.

Die Walze kann als eine konventionelle Walze ausgebildet sein, bei der der Walzenträger in der Regel als eine gegenüber einem feststehenden Ständer oder Lagerbock um ihre Längsachse drehbare Welle ausgebildet ist, auf der der Walzenmantel beispielsweise mit einem Teilbereich seiner inneren Umfangsfläche, insbesondere lediglich in einem Linienbereich, an- bzw. aufliegt, hierdurch auf dem Walzenträger gelagert ist und unter Drehung der Welle um ihre Längsachse abrollt. Alternativ und vorliegend bevorzugt kann die Walze als eine Biegeausgleichswalze, beispielsweise als schwimmende Walze (im Folgenden auch S-Walze genannt) oder als stempelgestützte Walze ausgebildet sein. Hierbei ist der Walzenträger, oder auch Querhaupt genannt, gegenüber dem Lagerbock üblicherweise feststehend angeordnet und der Walzenmantel um den Walzenträger drehbar angeordnet. In diesem Fall ist der Walzenmantel üblicherweise an seinen beiden axialen Enden durch entsprechende Lageranordnungen an dem Walzenträger gelagert und seine innere Umfangsfläche stützt sich in Längserstreckung zwischen den axialen Enden auf dem Walzenträger über ein Hydraulikvolumen oder über hydraulische Stützstempel ab, welches im Sinne des Ausdrucks der zumindest unterstützenden Funktion der inneren Umfangsfläche zu verstehen ist. Im Falle einer stempelgestützten Walze kann diese einen inneren Hub haben. Beim Schließen und Öffnen des Walzenspalts wird dann nicht die gesamte Walze relativ zur Gegenwalze verlagert, sondern nur der Walzenmantel relativ zum Walzenträger.

Bei den Biegeausgleichswalzen ist die Lagerung dahingehend zu verstehen, dass der Walzenmantel auf einer in zumindest einer Kammer des Walzenträgers befindlichen, druckbeaufschlagten Hydraulikflüssigkeit aufliegt bzw. gleitet. Diese Hydraulikflüssigkeit ist bei einer stempelgestützten Walze in Längserstreckung der Walze typischerweise bereichsweise ansteuerbar, insbesondere individuell mit Druck beaufschlagbar, sodass hierdurch in Längserstreckung der Walze unterschiedliche an der inneren Umfangsfläche des Walzenmantels anliegende Drücke und eine entsprechende Formgebung des Walzenmantels generierbar sind. Dies dient insbesondere zum Ausgleichen eines Durchbiegens der Walze und Konstanthalten eines zwischen der Walze und einer Gegenwalze ausgebildeten Behandlungsspalts. Dazu muss die innere Umfangsfläche des Walzenmantels einerseits eine ausreichende Form- und Maßhaltigkeit aufweisen, damit der zwischen Walzenmantel und Walzenträger erforderliche hydrostatische Druck aufgebaut und gehalten werden kann, andererseits ist gleichzeitig eine gewisse Biegsamkeit bzw. Elastizität des Walzenmantels erforderlich. Bei einer S-Walze ist der Druck üblicherweise nicht bereichsweise ansteuerbar. Hier wirkt - von Abweichungen aufgrund von Strömungswiderständen abgesehen - auf der gesamten Länge der Kammer der gleiche Druck.

Um eine entsprechende Biegsamkeit des Walzenmantels zu ermöglichen, werden bei den Biegeausgleichswalzen als Walzenmantel üblicherweise elastische Materialien bzw. Werkstoffe oder Werkstoffkombinationen verwendet, mit denen ein Walzenmantel mit einem niedrigen E-Modul in Längserstreckung bereitgestellt werden kann. Hierbei gilt, je niedriger der E-Modul in Längserstreckung ist, desto besser lässt sich der Walzenmantel mittels einer Druckbeaufschlagung an der inneren Umfangsfläche lokal, das heißt in nur einem gewünschten Bereich in Längserstreckung, nach radial außen hin "anheben". Die dem Walzenmantel im Betrieb gegenüber angeordnete Gegenwalze ist in der Regel als eine relativ harte Stahlwalze ausgebildet ist, welche beispielsweise zur Behandlung technischer Textilien zusätzlich vorzugsweise beheizbar ist.

Neben den voranstehenden vorteilhaften Eigenschaften sind an die Walzenmäntel, insbesondere hinsichtlich der Materialeigenschaften der den arbeitenden Walzenumfang bildenden äußeren Umfangsfläche, oder auch Manteloberfläche genannt, - je nach Anwendung - verschiedene, sich teils widersprechende Anforderungen gestellt. So soll die Manteloberfläche einerseits beim Vorliegen von zumeist am Warenbahnrand mitlaufenden Webkanten, die auch als Sulzer-Kanten oder Einlegekanten bezeichnet werden, sowie bei Quernähten, Fehlstellen und/oder Fremdkörpern in diesen Bereichen bevorzugt elastisch einfedern und anschließend wieder in die Ausgangsform zurückspringen können, andererseits soll die Manteloberfläche aber für einen Großteil der Anwendungen eine relativ hohe Härte für einen gewünschten Behandlungseffekt aufweisen.

Als Walzenmantel haben sich daher zumindest in Bezug auf eine Anwendung an einer S-Walze insbesondere Anordnungen umfassend einen als Stützrohr dienenden Mantelträger und mit entweder einem darauf lose aufgeschobenen, den arbeitenden Walzenumfang aufweisenden Walzenmantelrohr oder alternativ mit einem direkt auf den Mantelträger aufgebrachten und fest mit diesem verbundenen Belag bewährt. In Bezug auf eine Anwendung an einer stempelgestützten Walze haben sich zudem Gummi- oder Kunststoffmäntel ohne separaten Mantelträger bewährt, wobei hierbei die innere Umfangsfläche die Lauffläche an dem Walzenträger bildet. Ein solcher Gummi- oder Kunststoffmantel ist beispielsweise aus der DE 31 26 492 C2 bekannt.

Als Mantelträger dienen hierbei üblicherweise metallische, insbesondere aus Stahl oder Gusseisen hergestellte, relativ dünnwandige aber formstabile Rohre. Ferner haben sich solche Mantelträger bewährt, die aus einem faserverstärkten Kunststoff hergestellt sind und auf denen ein die jeweils gewünschte Oberflächengüte aufweisender Belag aufgebracht ist. Die aus faserverstärktem Kunststoff hergestellten Mantelträger haben aufgrund der Faserverstärkung einen relativ hohen E-Modul und sind daher zwar gegenüber metallischen Werkstoffen leichter verformbar, nicht jedoch gegenüber reinen Gummi- oder Kunststoffmänteln. Ein typischer E-Modul in Längserstreckung eines solchen Mantelträgers liegt zwischen 8000 und 12000 MPa.

Als ein solches auf den Mantelträger aufgeschobenes Walzenmantelrohr hat sich insbesondere ein aus Polyamid hergestelltes Rohr, im Folgenden auch als Polyamid-Rohr oder PA-Mantel bezeichnet, bewährt. Der PA-Mantel ist üblicherweise lose auf den Mantelträger aufgeschoben, wobei bevorzugt eine Durchmesserdifferenz zwischen dem Außenumfang des Mantelträgers und dem Innenumfang des PA-Mantels von typischerweise mindestens 1 mm vorliegt. Der auf den Mantelträger aufgeschobene PA-Mantel wird - beispielsweise bei einer Anwendung auf einer S-Walze - üblicherweise mit Anlaufscheiben axial gesichert, wobei die Anlaufscheiben eine langsame Gleitbewegung zulassen, da der PA-Mantel im Rotationsbetrieb eine geringere Drehzahl als der Mantelträger aufweist. Besonders vorteilhaft an dieser Ausgestaltung ist, dass der PA-Mantel bei einer Beschädigung, beispielsweise einer Oberflächenbeschädigung, mit relativ wenig Aufwand von dem Mantelträger abgenommen und kostengünstig gegen einen Ersatzmantel ausgetauscht werden kann, insbesondere ohne dass die Biegeausgleichswalze komplett ausgebaut werden muss.

Als PA-Mantel sind insbesondere extrudierte oder geschleuderte Mäntel mit einem geringen E-Modul von 1500 bis 4000 MPa und einer Härte von etwa 75 bis 85 °SHD (Shore D) bekannt. Solche PA-Mäntel haben den Vorteil, dass diese besonders weich-elastisch einfedern können und auftretende Oberflächenfehler in relativ einfacher Weise beseitigt, insbesondere ausgebügelt werden können.

Nachteilig an solchen PA-Mänteln ist jedoch, dass mit zunehmender Temperatur der E-Modul und die Härte des Materials deutlich abnehmen. Insbesondere ab der Glasübergangstemperatur von etwa 50 bis 60°C nehmen der E-Modul sowie die Härte ab. Ein solcher PA-Mantel ist daher für Betriebstemperaturen über 60°C in der Regel nur bedingt geeignet.

In Fällen, bei denen auch bei vergleichsweise hohen Betriebstemperaturen hohe Härtegrade erforderlich sind, werden daher üblicherweise Mantelträger mit Belag, im Folgenden als Belag-Mantel bezeichnet, angewendet. Ein typischerweise eingesetzter Belag, insbesondere ein Komposit-Belag, weist einen E-Modul von etwa 3000 bis 5000 MPa und eine Härte von etwa 85 bis 95 °SHD auf. Dies sind meist gewickelte Kompositbeläge, bestehend aus einem Matrixwerkstoff, wie Epoxidharz, Verstärkungsfasern, wie Glas- oder Aramidfasern, und weiteren Zusätzen zur Einstellung der gewünschten Parameter. Hierbei können - je nach Anforderung - entsprechende Beläge individuell ausgewählt und direkt auf den bei S-Walzen zumeist als ein einfaches Stahlrohr und bei stempelgestützten Walzen als faserverstärktes Kunststoffrohr ausgebildeten Mantelträger aufgebracht werden.

Nachteilig bei den bekannten Belag-Mänteln ist, dass der Belag auf den Mantelträger aufgebracht werden muss, welches einen zusätzlichen Herstellungsschritt bedeutet und die Herstellung dadurch aufwendig und kostenintensiv ist. Ferner lassen sich beispielsweise im Laufe der Betriebszeit auftretende Oberflächenfehler nur mit viel Aufwand oder gar nicht beseitigen, da diese Beläge - nicht zuletzt um auch bei hohen Temperaturen die gewünschte Härte bereitstellen zu können - üblicherweise nicht thermoplastisch verformbar sind. Vielmehr ist auch in diesem Fall ein Nachschleifen erforderlich, welches jedoch bei S-Walzen regelmäßig einen vollständigen Ausbau der Walze, bei stempelgestützten Walzen den Ausbau zumindest des Walzenmantels ggf. zusammen mit einem Mantelträger, sowie eine anschließende Bearbeitung durch einen geeigneten Fachbetrieb erfordert und daher besonders kostenintensiv ist. Um hierbei Produktionsausfälle zu vermeiden, sind ferner teure Ersatzwalzen erforderlich; alternativ dazu kann auch ein vollständiger Ersatz-Walzenmantel, also ein Mantelträger mit Belag, bereitgehalten werden, wobei zum Austausch des Walzenmantels von einer schwimmenden oder stempelgestützten Walze eine hohe Fachkompetenz und geeignete Vorrichtungen erforderlich sind. Es gibt weitere Beläge, insbesondere mit abweichender Härte, Gummibeläge oder naturfaserbasierte Oberflächenbeläge, wobei diese jedoch aufgrund ihrer Eigenschaften zumindest zur Behandlung von technischen Textilien mittels einer durchbiegesteuerbaren Walze grundsätzlich nur in Spezialfällen zum Einsatz kommen.

Darüber hinaus existieren Walzenmäntel, bei denen das Walzenmantelrohr auf den Mantelträger aufgeschoben und anschließend mit dem Mantelträger fest verbunden wird, insbesondere indem der zwischen dem Walzenmantelrohr und dem Mantelträger befindliche Zwischenraum vergossen wird. Hierbei ist zur besseren Verbindung mit dem Walzenmantelrohr auf den Mantelträger zumeist zusätzlich eine innere, dritte Schicht aufgebracht, insbesondere aufgewickelt. Derartige Kombinationen aus Walzenmantelrohr und Mantelträger werden vorliegend auch als Walzenmantel mit Belag angesehen, wobei der "Belag" hierbei nicht auf den Walzenmantel aufgetragen, sondern im Ganzen mit dem Walzenmantel verbunden ist. Zwar spielt hierbei die Oberflächengüte und Maßhaltigkeit der inneren Umfangsfläche des Walzenmantelrohrs nur eine untergeordnete Rolle, dennoch ist ein solches Herstellungsverfahren nicht zuletzt aufgrund der zahlreichen notwendigen Schritte aufwendig und bringt - genauso wie beim aufgetragenen Belag - keine wesentlichen Vorteile bei einem erforderlichen Austausch des Walzenmantelrohrs. Denn in diesem Fall muss das Walzenmantelrohr - wie beim aufgetragenen Belag - in aufwendiger Weise von dem Mantelträger abgetragen bzw. entfernt werden.

Aus den Druckschriften DE 10 2012 217 413 A1 und DE 10 2016 114 013 A1 sind Walzenmäntel für Walzen zur Herstellung von Vlies-, Papier- und Textilwarenbahnen bekannt. Eine Walze nach dem Oberbegriff des Anspruchs 1 ist aus der Druckschrift WO 2009 / 100 758 A1 bekannt.

Aufgabe der vorliegenden Erfindung ist es daher, eine Walze bereitzustellen, bei der zumindest einer der oben genannten Nachteile verbessert ist, insbesondere eine sichere und effiziente Anwendung auch bei Betriebstemperaturen über 60°C sowie eine unkomplizierte und kostengünstige Herstellung und Instandhaltung ermöglicht ist.

Die Erfindung löst die gestellte Aufgabe durch eine Walze mit den Merkmalen des Anspruchs 1 sowie durch ein Verfahren mit den Merkmalen des Anspruchs 20. Vorteilhafte Ausgestaltungen und Weiterbildungen der Erfindung sind in den Unteransprüchen, der Beschreibung sowie den Figuren offenbart.

Erfindungsgemäß ist der Walzenmantel als ein einen duroplastischen Kunststoff umfassender, homogener, selbsttragender Mantelkörper mit einer Härte von 85 bis 95 °SHD und einem E-Modul in Längserstreckung des Mantelkörpers bei Raumtemperatur von mindestens 2000 und maximal 8000 MPa und bei einer Temperatur von 70°C von mindestens 1000 und maximal 6000 MPa ausgebildet. Dadurch kann der Walzenmantel sowohl eine zur Ansteuerung eines Biegeausgleichs vorteilhafte, insbesondere relativ hohe Biegeelastizität als auch eine insbesondere zur Behandlung von technischen Textilien vorteilhafte, insbesondere relativ große Oberflächenhärte aufweisen.

Der Walzenmantel kann dabei vollständig aus einem oder auf Basis eines duroplastischen Kunststoffs, vorliegend kurz Duroplast genannt, gebildet sein, wobei in dem Duroplast zusätzlich Füllstoffe und/oder Verstärkungsteilchen eingebettet sein können. Es hat sich gezeigt, dass ein solcher duroplastischer Kunststoff - insbesondere im Gegensatz zu einem thermoplastischen Kunststoff - zur Anwendung bei relativ hohen Betriebstemperaturen besonders geeignet ist. Insbesondere sind hiermit die zur Behandlung einer Warenbahn relevanten Materialeigenschaften des Walzenmantels, wie eine ausreichende Härte und Elastizität, in einem besonders großen Temperaturbereich gewährleistet. Je nach zu behandelnder Warenbahn, kann der Temperaturbereich beispielsweise zwischen Raumtemperatur und 70°C, bevorzugt bis 120°C, besonders bevorzugt bis 150°C, liegen. Die optional zusätzlich eingebetteten Füllstoffe und/oder Verstärkungsteilchen können dem Walzenmantel weitere Vorteile verleihen, wie ein geringes Gewicht und/oder die besonders hohe Steifigkeit.

Unter dem Begriff "homogen" ist vorliegend zu verstehen, dass der gleiche Werkstoff die für den Behandlungseffekt maßgebliche Oberflächengüte als auch die für die Stützfunktion erforderliche Festigkeit und Stabilität bereitstellt. Dabei können in technischer Hinsicht durchaus Inhomogenitäten in dem Werkstoff vorliegen, beispielsweise eine unterschiedliche Verteilung der Füllstoffe bzw. Verstärkungsteilchen und/oder eine öldichte Schicht am inneren Umfang. Eine unterschiedliche Verteilung der Füllstoffe bzw. Verstärkungsteilchen, beispielsweise für eine größere Härte an den Umfangsoberflächen, kann gezielt herbeigeführt sein und/oder durch ein jeweiliges Herstellungsverfahren technisch bedingt sein, beispielsweise durch einen Schleuderprozess. Eine Nachbehandlung, insbesondere ein Schleifen der Oberflächen ist sodann in der Regel nicht erforderlich.

Die selbsttragende Eigenschaft des Mantelkörpers bewirkt, dass ein separater Mantelträger grundsätzlich nicht erforderlich ist. Dadurch sind insbesondere das Gesamtgewicht der Walze sowie die Biegeelastizität des Walzenmantels verbessert. Ferner können die in den Kammern befindlichen Drücke der Hydraulikflüssigkeit direkt auf den Walzenmantel wirken. Alternativ besteht die Möglichkeit, dass - insbesondere bei existierenden Behandlungsvorrichtungen - der erfindungsgemäße Walzenmantel, beispielsweise im Austausch, auf einen Mantelträger lose aufgeschoben und gemeinsam mit dem Mantelträger auf einen Walzenträger betrieben werden kann. Der Mantelträger kann dabei sowohl gegenüber dem Walzenträger als auch gegenüber dem Walzenmantel drehbar gelagert sein. In diesem Fall ist der Walzenmantel auf dem Mantelträger gelagert.

Überraschenderweise hat sich gezeigt, dass sich für einen solchen Walzenmantel mit diesen vorteilhaften Stabilitäts- und Biegeeigenschaften ein Material eignet, das eine Kombination der Materialeigenschaften aufweist, umfassend eine Härte von 90 +/-5 °SHD und einen E-Modul in Längserstreckung der Walze, der bei Raumtemperatur zwischen 2000 und 8000 MPa und bei einer Betriebstemperatur von 70°C, und bevorzugt auch bei einer Betriebstemperatur von 120°C, zwischen 1000 und 6000 MPa, besonders bevorzugt zwischen 1500 und 4000 MPa, liegt.

Die Härte des Walzenmantels von 90 +/-5 °SHD, insbesondere an der äußeren Umfangsfläche, bewirkt dabei eine für die Behandlung von Vlies-, Textil-, Kunststoff- oder Papierwarenbahnen besonders vorteilhafte Oberflächengüte. Die an der äußeren Umfangsfläche angeordnete Oberfläche kann hierdurch insbesondere sehr glatt, faser- und porenfrei sowie relativ widerstandsfähig gegen Eindringen oder Hängenbleiben von Teilen der Warenbahn oder Fremdkörpern sein. Dies ist beispielsweise in Bezug auf das zu behandelnde Fasermaterial bei der Behandlung von technischen Textilien vorteilhaft. An der inneren Umfangsfläche kann die relativ hohe Härte, insbesondere bei Biegeausgleichswalzen, dazu dienen, dem Walzenmantel in diesem Bereich eine ausreichende Form- und Maßhaltigkeit zu verleihen, damit der zwischen Walzenmantel und Stützstempel erforderliche hydrostatische Druck aufgebaut und gehalten werden kann.

Der E-Modul in Längserstreckung des Mantelkörpers, der bei Raumtemperatur zwischen 2000 und 8000 MPa und bei einer Betriebstemperatur von 70°C, und bevorzugt auch bei einer Betriebstemperatur von 120°C, um nicht mehr als die Hälfte, bevorzugt nicht mehr als ein Viertel abfällt, bewirkt insbesondere die für die Anwendung auf einer schwimmenden oder stempelgestützten Walze vorteilhafte Biegsamkeit des Walzenmantels, insbesondere auch bei hohen Betriebstemperaturen von bis zu 150°C.

Bei einer bevorzugten Ausführungsform beträgt die Dicke des Walzenmantels, d. h. der radiale Abstand zwischen innerer und äußerer Umfangsfläche des Walzenmantels mindestens 20 mm, besonders bevorzugt mindestens 30 mm.

Vorzugsweise beträgt der Außendurchmesser des Walzenmantels mindestens 250 mm und maximal 800 mm.

Es hat sich gezeigt, dass Walzenmäntel, die diese Dicke und/oder diesen Außendurchmesser aufweisen, besonders gut zur Bildung des selbsttragenden Mantelkörpers geeignet sind.

In Kombination dieser Materialeigenschaften ist dabei ein Walzenmantel entstanden, welcher sowohl die Vorteile eines selbsttragenden Mantels als auch die Vorteile eines Belag-Mantels aufweist. So ist sowohl die Möglichkeit einer kostengünstigen Herstellung und - im Bedarfsfall - eines kostengünstigen Austausches sowie die vorteilhafte Biegsamkeit und Elastizität des Walzenmantels in Längserstreckung gegeben, wodurch eine nur lokale Formgebung des Walzenumfangs, eine ausreichende Stabilität auch bei relativ hohen Betriebstemperaturen und dadurch insbesondere die selbstragende Eigenschaft des Walzenmantels ermöglicht ist, als auch die Vorteile eines Belag-Mantels, wie eine geeignete Oberflächengüte, insbesondere eine relativ glatte und besonders harte Oberfläche.

Folglich ist insgesamt eine Walze mit einem Walzenmantel bereitgestellt, die sowohl eine - auch bei höheren Betriebstemperaturen - sichere und effiziente Anwendung als auch relativ geringe Herstellungs- und Instandhaltungskosten ermöglicht.

Als Beispiel eines zur Bildung des Walzenmantels geeigneten Werkstoffs mit den zuvor genannten Materialeigenschaften sei das als Belag für einen Mantelträger bekannte Material "MirrorMax" (Handelsname, hergestellt von Yamauchi Co., Ltd.) genannt. Überraschenderweise hat sich gezeigt, dass dieses Material nicht nur - wie bekannt - zur Bildung eines mit einem Mantelträger fest verbundenen Belags geeignet ist, sondern auch zur Ausbildung eines homogenen, selbsttragenden Walzenmantels.

In einer ersten Ausgestaltung der Erfindung weist der Walzenmantel einen E-Modul in Umfangsrichtung bei Raumtemperatur von mindestens 2250 und maximal 5000 MPa und bei einer Temperatur von 70°C, vorzugsweise 120°C, von mindestens 1500 und maximal 4500 MPa auf. Dadurch ist insbesondere eine für die Anwendung auf einer schwimmenden oder stempelgestützten Walze vorteilhafte Biegsamkeit des Walzenmantels auch in Umfangsrichtung gegeben.

Besonders bevorzugt weist der Walzenmantel einen E-Modul auf, der in alle Raumrichtungen gleich ist. Unter "in alle Raumrichtungen gleich" ist zu verstehen, dass keine Maßnahmen unternommen wurden, um in verschiedene Raumrichtungen verschiedene E-Module zu erzeugen. Fertigungstoleranzbedingte Unterschiede sind jedoch von "gleich" erfasst. Eine solche Ausgestaltung kann beispielsweise bei einem Walzenmantel der Fall sein, welcher in technischer Hinsicht keine Inhomogenitäten, das heißt vorliegend im Wesentlichen keine ungleichmäßig verteilten Füllstoff- und/oder Verstärkungsteilchen, aufweist. Dadurch ist eine besonders vorteilhafte Biegsamkeit des Walzenmantels gegeben, insbesondere für sehr kleine Verformungsbereiche.

Der Walzenmantel ist bevorzugt geeignet, bei einer Dauerbetriebstemperatur von mindestens 130°C, vorzugsweise von mindestens 150°C, betrieben zu werden. Dadurch können insbesondere auch Warenbahnen bearbeitet werden, welche zur Behandlung eine relativ hohe Behandlungstemperatur erfordern. Ferner ist die hohe zulässige Betriebstemperatur dahingehend als ein wichtiger Vorteil anzusehen, als dass aufgrund der - insbesondere bei der schwimmenden Walze ausgebildeten - Form des Behandlungsspalt bei reduzierten Warenbahnbreiten der Walzenmantel im Randbereich nur bedingt zurückgezogen werden kann und daher ein - wie im Stand der Technik erforderliches - regelmäßiges Wegziehen des gesamten Walzenmantels von der heißen Gegenwalze nicht mehr erforderlich ist.

Der Walzenmantel kann zumindest an der äußeren Umfangsfläche, vorzugsweise zusätzlich auch an der inneren Umfangsfläche, eine Oberflächenrauigkeit Ra von 0,2 bis 1,6 µm, bevorzugt 0,2 bis 0,8 µm, aufweisen. Es hat sich gezeigt, dass eine Walze mit einer solchen äußeren Umfangsfläche besonders gut zur Behandlung von technischen Textilien geeignet ist. Eine Oberfläche mit einer relativ geringen Rauigkeit dient zusätzlich in vorteilhafter Weise der Vermeidung von Oberflächenverschleiß. Zusätzlich kann bei Biegeausgleichswalzen eine besonders große Dichtigkeit an der inneren Umfangsfläche gegenüber der den hydrostatischen Druck aufbauenden Hydraulikflüssigkeit erreicht werden, wenn auch die innere Umfangsfläche diese Oberflächenrauigkeit aufweist.

Es hat sich als vorteilhaft herausgestellt, wenn die Herstellung des Walzenmantels mittels eines Schleudergussverfahrens erfolgt. Dadurch kann der Walzenmantel besonders unkompliziert und kostengünstig hergestellt werden. Ferner kann die für die Homogenität des Materials erforderliche gleichmäßige Verteilung des duroplastischen Kunststoffs und/oder optionaler Verstärkungsteilchen in besonders einfacher Weise erzeugt werden. Alternativ ist es grundsätzlich möglich, den Walzenmantel durch Extrudieren oder Gießen herzustellen, wobei dies insbesondere bei faserhaltigen Walzenmänteln vorteilhaft sein kann.

Insbesondere zur Anwendung des Walzenmantels an einer schwimmenden Walze ist der Walzenmantel auf einen eine Oberfläche aufweisenden Mantelträger lose aufgeschoben und insbesondere gegenüber dem Mantelträger durch Anlaufscheiben axial gesichert. Dadurch kann der Walzenmantel, insbesondere bei einem vorhandenen Mantelträger, wie es bei existierenden Vorrichtungen zur Behandlung von Vlies-, Textil-, Kunststoff- oder Papierwarenbahnen der Fall sein kann, in besonders einfacher Weise, insbesondere zum Ersetzen eines aus dem Stand der Technik bekannten Walzenmantelrohrs, wie eines Polyamid-Rohrs bzw. PA-Mantels, getauscht werden. Demgemäß kann der erfindungsgemäße Walzenmantel einen kostengünstigen Ersatz für aus dem Stand der Technik bekannte Walzenmäntel bilden.

Besonders bevorzugt weist bei der zuvor erläuterten Anwendung der Mantelträger an seiner Oberfläche eine Schutzbeschichtung auf, die elastischer oder weicher ausgebildet ist als der Mantelkörper. Die Schutzschicht kann durch den Mantelträger gebildet oder auf diesem aufgebracht sein. Dadurch können sich eventuell vorhandene Schmutzpartikel in die Schutzbeschichtung hinein arbeiten, so dass hierdurch ansonsten resultierende mögliche punktuelle Überlastungen des Walzenmantels vermieden werden können. Besonders bevorzugt ist diese Schutzbeschichtung als eine Gummierung ausgebildet.

Der zur Herstellung des Walzenmantels dienende und den Walzenmantel zumindest teilweise bildende Duroplast ist bevorzugt auf Basis eines Kunstharzes erzeugt, der üblicherweise eine temperaturabhängige Viskosität aufweist, insbesondere bei Raumtemperatur viskos ist. Beispielsweise ist der duroplastische Kunststoff auf Epoxidbasis oder auf Basis von vernetzbaren Polyurethanen hergestellt. Es hat sich gezeigt, dass ein solcher duroplastischer Kunststoff zum Erzeugen der gewünschten Härte und des gewünschten E-Moduls besonders geeignet ist.

Bevorzugt weist das - insbesondere als Basismaterial dienende - Kunstharz, insbesondere Epoxidharz, eine Glasübergangstemperatur zwischen 100 und 200°C auf, besonders bevorzugt zwischen 130 und 150°C, besonders bevorzugt zwischen 140 und 145°C. Dadurch kann eine besonders große Festigkeit des Walzenmantels auch bei relativ hohen Betriebstemperaturen gewährleistet werden.

Besonders bevorzugt umfasst der Walzenmantel einen Teilchen-Duroplast-Verbund, das heißt dem duroplastischen Kunststoff sind Füllstoff- und/oder Verstärkungsteilchen beigemischt. Durch das einstellbare Mischungsverhältnis von Duroplast und Füllstoff- und/oder Verstärkungsteilchen zu einem Verbund dieser beiden Ausgangsstoffe können die Materialeigenschaften des Walzenmantels, insbesondere die Steifigkeit bzw. Elastizität sowie das Gewicht, - je nach Erfordernis oder Vorteil für die jeweilige Anwendung - innerhalb eines begrenzten Rahmens individuell erzeugt werden.

Die Füllstoff- und/oder Verstärkungsteilchen können beispielsweise langgestreckte, faserartige Teilchen mit einer Länge von jeweils weniger als 0,2mm, vorzugsweise weniger als 0,02mm, umfassen, nachfolgend kurz als Fasern bezeichnet. Unter "langgestreckt" ist zu verstehen, dass diese Teilchen in einer Raumrichtung eine Ausdehnung aufweisen, die mindestens um eine Größenordnung größer als die Ausdehnung in den beiden hierzu senkrechten Erstreckungen ist. Durch die Beimischung solcher Fasern kann insbesondere die Steifigkeit und Elastizität des Walzenmantels verbessert sein. Die Beimischung besonders kleiner Fasern kann dabei insbesondere für die Ausbildung einer besonders glatten Oberfläche des Walzenmantels vorteilhaft sein. Insbesondere kann hierdurch vermieden werden, dass einzelne, an der Oberfläche des Walzenmantels angeordnete Fasern die Oberflächenbeschaffenheit negativ beeinflussen. Bei einer feinen Verteilung der Fasern kann die Oberfläche - insbesondere gegenüber gewickelten Belägen mit deutlich gröberen Fasern - sehr glatt ausgebildet sein, und es kann vorteilhafterweise ein besonders hoher Glanz erzielt werden. Darüber hinaus kann mit den relativ feinen Fasern auch eine Öldichtigkeit an der inneren Umfangsfläche gebildet sein, da über diese feinen Fasern - im Gegensatz zu den üblicherweise relativ großen Faserpartikeln - das Öl nicht nach außen transportiert werden kann. Eine zusätzliche, insbesondere öldichte Beschichtung ist in diesem Fall nicht erforderlich.

Bevorzugt umfassen die Füllstoff- und/oder Verstärkungsteilchen alternativ oder zusätzlich zu den Fasern Partikel. Unter Partikeln sind insbesondere solche Teilchen zu verstehen, deren Ausdehnung in allen drei Raumrichtungen in derselben Größenordnung liegt. Die Partikel können insbesondere eine Form aufweisen, die sich durch eine Kugel einhüllen lässt. Der Durchmesser der Kugel beträgt vorzugsweise weniger als 0,05mm, weiter bevorzugt weniger als 0,005mm. Durch die Beimischung solcher insbesondere als Füllstoffe dienenden Partikel kann die Elastizität des Walzenmantels weiter verbessert und das Gewicht des Walzenmantels relativ niedrig ausgebildet sein.

Besonders bevorzugt sind die Partikel in zwei Raumrichtungen in einer im Wesentlichen gleichen Größenordnung und in der dritten Raumrichtung in einer vergleichsweise deutlich kleineren Größenordnung ausgebildet. Das bedeutet, die Partikel können insbesondere platten- bzw. plättchenförmig ausgebildet sein. Es hat sich gezeigt, dass diese plattenförmigen Partikel sowohl eine gesteigerte Steifigkeit als auch eine besonders glatte Oberfläche des Walzenmantels bewirken können. Durch das zuletzt genannte Merkmal kann beispielsweise ein besonders hoher Glanz des herzustellenden Produkts erzielt werden. Ferner kann hierdurch bei der Ausbildung einer besonders dünnen Schicht, wie dem Walzenmantel, eine verbesserte Verringerung der Dichte des Epoxidharzes ermöglicht sein, sowie eine verbesserte Abrasionsbeständigkeit der Walzenoberfläche bewirkt werden.

Als Beispiel für solche Füllstoff- und/oder Verstärkungsteilchen seien die an sich bekannten mineralischen Füllstoffe genannt. Dabei können die als mineralische Füllstoffe ausgebildeten Teilchen in dem Walzenmantel bevorzugt einen Anteil von 5 bis 40 Gewichts-Prozent gemessen am Gesamt-Gewicht bilden. Es hat sich gezeigt, dass bei einem solchen Anteil an Füllstoff- und/oder Verstärkungsteilchen die hinsichtlich der Härte und des E-Moduls des Walzenmantels gewünschten Parameterwerte besonders vorteilhaft erzeugt werden können.

Besonders bevorzugt sind die insbesondere als plattenförmige Partikel ausgebildeten Füllstoff- und/oder Verstärkungsteilchen aus einer Zusammensetzung aus im Wesentlichen Kalium und Aluminium gebildet. Diese plattenförmige Partikel können eine Schichtenstruktur bilden und sind als Verstärkungsteilchen besonders geeignet. Insbesondere kann hierdurch auch bei relativ hohen Dauer-Betriebstemperaturen eine sichere Festigkeit bzw. Steifigkeit des Walzenmantels gewährleistet werden. Hierbei bilden die plattenförmigen Partikel bevorzugt einen Anteil von 30 bis 40 Gewichts-Prozent gemessen am Gesamt-Gewicht. Der übrige, primäre Anteil zwischen 60 und 70 Gewichts-Prozent gemessen am Gesamt-Gewicht ist bevorzugt durch das - oben erwähnte - Epoxidharz gebildet.

Der in einem Zwischenraum zwischen den insbesondere als plattenförmige Partikel ausgebildeten Füllstoff- und/oder Verstärkungsteilchen vorgesehene Epoxidharz kann zusätzlich pulverförmige Partikel aufweisen. Diese pulverförmigen Partikel sind bevorzugt durch Siliziumdioxid gebildet und können beispielsweise eine thixotrope Einstellung des Epoxid- bzw. Reaktionsharzes ermöglichen. Hierdurch kann insbesondere ein besonders festes Aneinanderhaften bzw. Kleben der Komponenten des Teilchen-Duroplast-Verbunds, wie der Füllstoff- und/oder Verstärkungsteilchen sowie des Epoxidharzes, aneinander und somit ein besonders hoher Zusammenhalt des Gesamt-Verbunds bewirkt werden.

In einer bevorzugten Ausgestaltung ist die Walze als eine insbesondere schwimmende oder stempelgestützte Biegeausgleichswalze ausgebildet, wobei der auf dem Walzenträger befindliche Walzenmantel an seiner inneren Umfangsfläche zumindest in einem Teilbereich mit einem vorzugsweise hydraulischen Druck beaufschlagbar ist, insbesondere in einem umfangsseitigen und axialen Teilbereich. Dadurch können in Längserstreckung unterschiedliche radiale Abstände zwischen der äußeren Umfangsfläche des Walzenmantels und dem Walzenträger erzeugt werden. Bei der schwimmenden Walze kann es sich auch um eine stempelgestützte Walze mit metallischem Rohr handeln. Auch kann der erfindungsgemäße Walzenmantel lose auf einen konventionellen Walzenkörper aufgeschoben Verwendung finden.

Das erfindungsgemäße Verfahren zur Herstellung einer solchen Walze sieht vor, dass in einem ersten Schritt ein flüssiger Kunststoffharz mittels eines Schleudergussverfahrens in einer rohrförmigen Kokille zu einem den Walzenmantel bildenden Rohrkörper in Form gebracht wird. Es folgt eine Vernetzung des Kunstharzes durch Ultraviolett- und/oder Infrarot-Strahlung, zu einem duroplastischen Kunststoff. Anschließend wird der Rohrkörper aus der Kokille entnommen. In einem weiteren Verfahrensschritt wird der Walzenmantel erforderlichenfalls an der äußeren Umfangsfläche zur Bildung einer Oberflächenrauigkeit Ra von 0,2 bis 1,6 bearbeitet. In einem letzten Schritt wird der Walzenmantel für den Betrieb lose auf einen Walzenträger oder Mantelträger aufgeschoben.

Die Walze kann sodann derart in Betrieb genommen werden. Ein solches Verfahren ermöglicht insbesondere eine besonders unkomplizierte und kostengünstige Herstellung einer solchen Walzenmantels.

Nachfolgend werden drei Ausführungsbeispiele der Erfindung anhand der Figuren näher erläutert. Gleiche Bezugszeichen bezeichnen gleiche Komponenten. Es zeigen schematisch:
- Figur 1 -: eine erfindungsgemäße schwimmende Walze in einer Längsschnitt-Ansicht;
- Figur 2 -: eine erste Ausgestaltung einer erfindungsgemäßen stempelgestützten Walze in einer Längsschnitt-Ansicht;
- Figur 3 -: eine Querschnitts-Ansicht dieser stempelgestützten Walze;
- Figur 4 -: eine zweite Ausgestaltung einer erfindungsgemäßen stempelgestützten Walze in einer Längsschnitt-Ansicht;
- Figur 5 -: ein Ausschnitt einer rein schematischen Detailschnittansicht einer Ausgestaltung des Walzenmantels;
- Figur 6 -: eine Vorrichtung zum Betreiben einer erfindungsgemäßen Walze in einer Ansicht in Längserstreckung der erfindungsgemäßen Walze;
- Figur 7 -: dieselbe Vorrichtung in einer Ansicht quer zur Längserstreckung der erfindungsgemäßen Walze; und
- Figur 8 -: ein Liniendiagramm eines Vergleichstests.

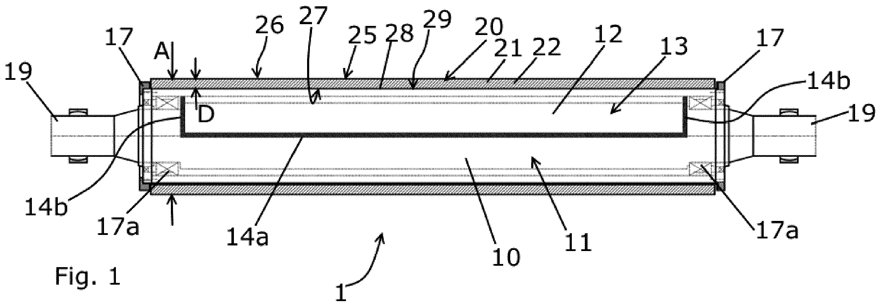

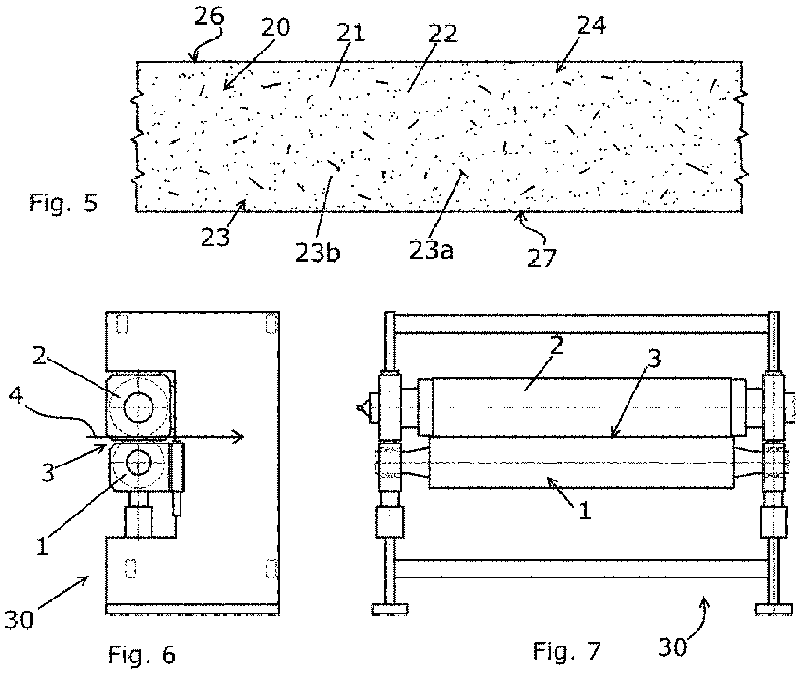

In der Figur 1 ist ein erstes Ausführungsbeispiel einer erfindungsgemäßen Walze 1 gezeigt. Die Walze 1 ist eine Behandlungswalze und vorliegend als eine sogenannte Biegeausgleichswalze in Form einer schwimmenden Walze ausgebildet. Eine solche Walze 1 wird beispielsweise dazu verwendet, um an einer Vorrichtung 30 zur Behandlung von Vlies-, Textil-, Kunststoff- oder Papierwarenbahnen mit einer Gegenwalze 2 einen Behandlungsspalt 3 zu bilden, durch den eine Warenbahn 4 zur Behandlung geführt wird, wie beispielhaft in Figuren 6 und 7 gezeigt ist. Die Walze 1 umfasst insbesondere einen Walzenträger 10 und einen um den Walzenträger 10, insbesondere um eine in Längserstreckung des Walzenträgers 10 verlaufende Drehachse, drehbaren Walzenmantel 20.

Der Walzenträger 10 weist an seinen axialen Enden jeweils einen Walzenzapfen 19 auf, über die der Walzenträger 10 und letztlich die Walze 1 an einem nicht dargestellten, feststehenden Ständer oder Lagerbock gelagert werden kann. Die Gesamtheit aus Walzenträger 10 und Walzenzapfen 19 wird auch als Querhaupt 11 bezeichnet. Der Walzenträger 10 weist in einem Querschnittsbereich, vorliegend in Figur 1 in einem oberen Bereich, eine sich vorliegend über nahezu die gesamte Länge des Walzenträgers 10 erstreckende und von zumindest einer Längsdichtung 14a und Querdichtungen 14b begrenzte Kammer 12 auf, in der eine Hydraulikflüssigkeit 13 vorgesehen ist. Die Hydraulikflüssigkeit 13 kann insbesondere über nicht dargestellte Leitungen bereitgestellt und über nicht dargestellte Mittel druckbeaufschlagt sein, insbesondere derart, dass an einer inneren Umfangsfläche 27, über der die Lagerung des Walzenmantels 20 erfolgt, eine Druckkraft angelegt und variiert werden kann.

Der Walzenmantel 20 umfasst eine den arbeitenden Walzenumfang 25 bildende äußere Umfangsfläche 26. Vorliegend ist der Walzenmantel 20 lose auf einen als Stützrohr dienenden Mantelträger 28 aufgeschoben. Dazu ist der Durchmesser der inneren Umfangsfläche 27 des Walzenmantels 20 bevorzugt mindestens 1 mm größer als der Außendurchmesser des Mantelträgers 28. Im Betrieb der Walze 1 rotiert der Walzenmantel 20 somit auf dem Mantelträger 28, welcher wiederum gegenüber dem Walzenträger 10 rotiert. Der Mantelträger 28 ist dazu insbesondere an seinem Innenumfang in an sich bekannter Art und Weise, insbesondere über eine nicht näher bezeichnete Lagerung 17a an dem Walzenträger 10 drehbar gelagert. Aufgrund der unterschiedlichen Durchmesser rotiert der Mantelträger 28 in der Regel mit einer höheren Drehzahl als der Walzenmantel 20. Zur Vermeidung eines axialen Verrutschens des Walzenmantels 20 ist dieser an seinen axialen Enden durch jeweils eine mit dem Walzenträger 10 verbundene Anlaufscheibe 17 gesichert. Bei dem in Fig. 1 dargestellten Ausführungsbeispiel kann die linke der Anlaufscheiben 17 demontiert werden, um ein Abziehen des Walzenmantels 20 zu ermöglichen. Sollte bei dem Walzenmantel 20 ein Nachschleifen der umfangsseitigen Oberfläche 26, 27 erforderlich sein, so ist es lediglich erforderlich, den Walzenmantel 20 auszutauschen, nicht die gesamte Walze 1. Zur Wahrung der Produktion genügt sodann ein kostengünstiger Ersatzmantel, eine relativ teure Ersatzwalze muss nicht bereitgehalten werden.

Der Mantelträger 28 ist vorliegend beispielsweise als ein metallisches, insbesondere aus Stahl oder Gusseisen hergestelltes, dünnwandiges aber formstabiles Rohr ausgebildet. An seinem Innenumfang weist der Mantelträger 28 eine zur Abdichtung der Kammer 12 geeignete Oberflächengüte auf, insbesondere eine besonders glatte Oberfläche. An dem Außenumfang des Mantelträgers 28 ist vorliegend eine besonders elastische oder weiche Schutzbeschichtung 29, insbesondere eine Gummierung, angeordnet, um mögliche Fremdkörper oder Schmutzpartikel, die beispielsweise beim Aufschieben des Walzenmantels 20 auf den Mantelträger 28 zwischen diese beiden geraten ist, aufzunehmen und eindringen zu lassen, sodass eine insbesondere lokale bzw. punktuelle Überbelastung des Walzenmantels 20 vermieden werden kann.

Der Walzenmantel 20 umfasst einen Duroplast 22, der insbesondere auf Basis eines Kunstharzes, der eine temperaturabhängige Viskosität aufweist, beispielsweise auf Basis eines Epoxidharzes oder auf Polyurethanbasis, hergestellt ist und die folgenden, besonderen Materialeigenschaften aufweist. Der Walzenmantel 20 ist insbesondere als ein homogener, selbsttragender Mantelkörper 21 ausgebildet, wobei unter dem Begriff homogen zu verstehen ist, dass der gleiche Werkstoff die für den Behandlungseffekt maßgebliche Oberflächengüte bildet als auch die für die Stützfunktion erforderliche Festigkeit des Walzenmantels 20 bereitstellt. Dies wird insbesondere dadurch ermöglicht, dass der den Walzenmantel 20 bildende Mantelkörper 21 eine Härte von 85 bis 95 °SHD und einen E-Modul in Längserstreckung des Mantelkörpers 21 bei Raumtemperatur von mindestens 2000 und maximal 8000 MPa, und bei einer Temperatur von 70°C, vorzugsweise 120°C, von mindestens 1000 und maximal 6000 MPa aufweist.

Der Walzenmantel 20 kann einen E-Modul in Umfangsrichtung bei Raumtemperatur von mindestens 2250 und maximal 5000 MPa und bei einer Temperatur von 70°C, vorzugsweise 120°C, von mindestens 1500 und maximal 4500 MPa aufweisen, wobei der Walzenmantel 20 bevorzugt einen entsprechenden E-Modul aufweist, der in alle Raumrichtungen gleich ist.

Es hat sich gezeigt, dass eine solche Kombination von Materialeigenschaften, insbesondere die Kombination einer relativ hohen Härte, wie sie üblicherweise nur von Mantelträgern mit Belag bekannt ist, und einem relativ niedrigen E-Modul, wie es üblicherweise nur von selbsttragenden Polyamid-Mänteln bekannt ist, besonders positive Auswirkungen auf die Anwendbarkeit eines solchen Walzenmantels 20 an einer Biegeausgleichswalze hat, wie beispielsweise in dem in Figur 5 gezeigten Diagramm deutlich erkennbar ist.

Der Walzenmantel hat bei dem dargestellten Ausführungsbeispiel eine Dicke D von mehr als 20 mm und einen Außendurchmesser A, der mindestens 250 mm, maximal 800 mm beträgt.

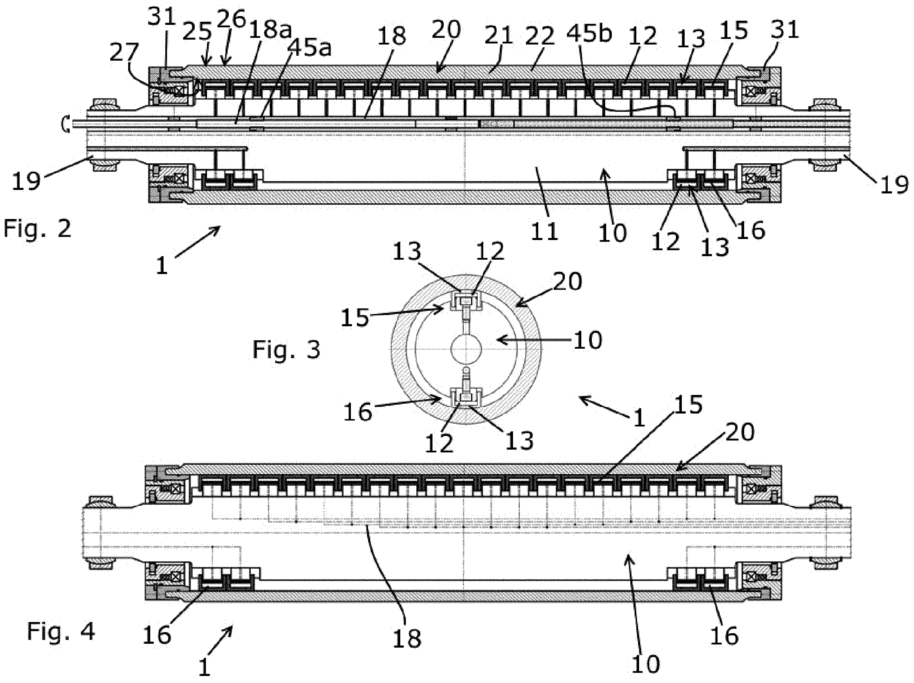

In den Figuren 2, 3, und 4 ist jeweils eine als stempelgestützte Biegeausgleichswalze ausgebildete Walze 1 gezeigt, wobei der jeweils angewendete Walzenmantel 20 zumindest hinsichtlich seiner Materialeigenschaften im Wesentlichen dem zuvor zu Figur 1 beschriebenen Mantelkörper 21 entspricht. Die stempelgestützte Walze umfasst in Längserstreckung eine Mehrzahl von hydraulischen Stützstempeln 15, 16, die jeweils eine Kammer 12 für die Hydraulikflüssigkeit 13 umfassen. Die Stützstempel 15, 16, oder auch Stützelemente genannt, können gegenüber dem Walzenträger 10 radial beweglich geführt sein, zumindest mit einem Abschnitt mit einer Anlagefläche gegen die innere Umfangsfläche 27 des Walzenmantels 20 anliegen und unter der Wirkung des Drucks der Hydraulikflüssigkeit den Walzenmantel 20 bereichsweise nach radial außen drücken. Dadurch wird gegen die innere Umfangsfläche 27 eine Kraft ausgeübt, die die Linienkraft im Behandlungsspalt 3 ergibt. Die dem Behandlungsspalt 3 zugewandten Stützstempel 15 sind einander dicht benachbart und erstrecken sich über praktisch den gesamten wirksamen Längenbereich des Walzenmantels 20.

Der hierbei gezeigte Walzenmantel 20 ist wiederum als ein selbsttragender Walzenkörper 21 aufgebaut, der - im Gegensatz zu dem in Figur 1 gezeigten Walzenkörper 21 - nicht auf einen Mantelträger 28 sondern direkt auf den Walzenträger 10 aufgeschoben ist. Dadurch liegt der in den Kammern 12 jeweils anliegende Druck der Hydraulikflüssigkeit 13 unmittelbar an der inneren Umfangsfläche 27 des Walzenkörpers 21 bzw. des Walzenmantels 20 an. Dementsprechend kann eine Druckerhöhung in der Kammer 12 unmittelbar an den Walzenmantel 20 übertragen werden. Um an der inneren Umfangsfläche 27 eine ausreichende Öldichtigkeit zu gewährleisten, ist die innere Umfangsfläche 27 bevorzugt zusätzlich bearbeitet. Die Lagerung des Walzenkörpers 21 erfolgt jeweils an seinen axialen Enden über Lageranordnungen 17a, die in bekannter Weise so ausgestaltet sein können, dass sie einen Hub des Walzenmantels 20, relativ zum Walzenträger 10 ermöglichen.

Bei einer solchen Anwendung ist ein Walzenmantel in der Regel relativ hohen Belastungen ausgesetzt, denn die dem Behandlungsspalt 3 zugewandten Stützstempel 15 wirken in Richtung einer vorliegend nicht dargestellten Gegenwalze 2, welche in den Figuren 2, 3 und 4 oberhalb der Walze 1 angeordnet wäre, wohingegen im Randbereich die Rückzugstempel 16 dieser Kraft entgegen wirken. Die Rückzugsstempel 16 dienen insbesondere dazu, um seitlich der Warenbahn 4, bzw. seitlich der Warenbahnbreite, insbesondere wenn diese schmaler als die maximal mögliche Warenbahnbreite ist, einen Kontakt des Walzenmantels 20 mit der Gegenwalze 2 zu verhindern und/oder um die Linienkraft im Bereich des Warenbahnrands zu reduzieren. Der Walzenmantel 20 wird dadurch ovalisiert, während er gleichzeitig durch eine jeweils stirnseitige Aufnahmefassung 31 in eine runde Form gezwängt wird. Überraschenderweise hat sich gezeigt, dass der erfindungsgemäß relativ harte, aber in vergleichbarer Weise mit dem aus dem Stand der Technik bekannten relativ elastischen PA-Mantel biegsame Walzenmantel 20 diesen Belastungen sicher und dauerhaft standhalten kann. Auch bei dieser Walze wirkt sich der im Vergleich zu herkömmlichen Walzenmänteln große E-Modul auch bei hohen Temperaturen positiv aus. So ist hierbei beispielsweise ein regelmäßiges Beabstanden, insbesondere des Walzen-Randbereichs, oder Wegziehen des gesamten Walzenmantels von einer beheizten Gegenwalze nicht mehr erforderlich. Die mit den Rückzugsstempeln aufzubringende Kraft kann entsprechend kleiner und die den Mantel ovalisierenden Kräfte geringer sein.

Bei der in den Figuren 2 und 3 gezeigten Walze 1 wird die Druckbeaufschlagung der in den Kammern 12 befindlichen Hydraulikflüssigkeit 13 mittels zweier Kolben 45a, 45b, die in Art einer Spindelmutter auf einer drehbaren Spindel 18a, insbesondere in Bereichen mit zwei gegenläufigen Steigungen, per Hand oder automatisiert verlagert werden können, verstellt. Durch Verlagerung der Kolben werden die Stempel der Breite nach zu- oder abgeschaltet. Aufgrund eines Spaltes zwischen dem Kolben und der Walzenmantelinnenfläche ist eine kontinuierliche Leckage gegeben. Zum Ausgleich wird ständig Öl in den Rohrabschnitt zwischen den Kolben gepumpt. Der Öldruck wird zur Einstellung der Linienkraft geregelt. Insbesondere können die Kolben 45a, 45b mittels der Spindel 18a für eine Druckerhöhung der zwischen den beiden Kolben 45a, 45b befindlichen Hydraulikflüssigkeit aufeinander zu oder zum Absinken des Drucks in diesem Abschnitt voneinander weg bewegt werden. Dadurch können die Kammern 12 bereichsweise mit unterschiedlichen Drücken beaufschlagt werden, welches eine entsprechende Biegung des Walzenmantels 20 hervorrufen kann.

Bei der in der Figur 4 gezeigten Walze 1 erfolgt die Druckbeaufschlagung der in den Kammern 12 befindlichen Hydraulikflüssigkeit 13 über Fluidleitungen 18, welche mit unterschiedlichen Kammern 12, insbesondere spiegelsymmetrisch zur Walzenmitte, untereinander verschaltet sein können, und eine entsprechende, nicht dargestellte Druckquelle. Im Übrigen entspricht die in der Figur 4 gezeigte Walze 1 der in Figur 3 gezeigten Walze.

In der Figur 5 ist ein Längsschnitt durch einen erfindungsgemäßen Walzenmantel 20 rein schematisch gezeigt. Der Walzenmantel 20 ist hierbei als ein Teilchen-Kunststoff-Verbund 24 aufgebaut, umfassend den Duroplast 22 sowie Füllstoff-und/oder Verstärkungsteilchen 23. Die Füllstoff- und/oder Verstärkungsteilchen 23 sind dabei in den Duroplast 22 eingebettet und können - wie vorliegend sowohl Fasern 23a als auch Partikel 23b umfassen. Selbstverständlich ist es möglich, dass nur eines der zuvor genannten Merkmale (Fasern und/oder Partikel) verwirklicht ist. Die Fasern 23a weisen eine Länge von bevorzugt weniger als 0,2mm auf. Die Partikel 23b weisen einen Durchmesser von vorzugsweise weniger als 0,05mm auf. Die Partikel 23b können kugel- oder plattenförmig ausgebildet sein. Der durch einen solchen Teilchen-Kunststoff-Verbund aufgebaute, als Walzenmantel 20 ausgebildete Mantelkörper 21 kann eine besonders vorteilhafte, insbesondere harte und glatte Oberfläche an den Umfangsflächen und gleichzeitig eine besonders vorteilhafte, insbesondere elastische und biegsame Gesamtstruktur aufweisen. Besonders bevorzugt weist ein solcher Walzenmantel eine Druckfestigkeit von über 150 MPa und eine Zugfestigkeit von über 50 MPa auf.

In den Figuren 6 und 7 ist jeweils als Beispiel eine Vorrichtung 30 zum Betreiben der erfindungsgemäßen Walze 1 gezeigt. Die Walze 1 bildet hierbei mit einer Gegenwalze 2 einen Behandlungsspalt 3 zum Durchführen und Behandeln einer Warenbahn 4. Hierbei ist mit der Walze 1 in dem Behandlungsspalt 3 besonders bevorzugt eine Linienkraft von 5 bis 600N/mm, bevorzugt 25 bis 400N/mm erzeugbar. Der Vollständigkeit halber sei erwähnt, dass eine solche stempelgestützte Walze 1 auch an einer 3-Walzen-Vorrichtung betrieben werden kann, bei der zwei Behandlungsspalte bzw. zwei Press-Nips gleichzeitig auf den Mantel der Biegeausgleichswalze 1 einwirken, insbesondere zur Textilbehandlung. Ferner sind Anwendungen für weitere Warenbahn-Produkte denkbar, zum Beispiel für Nonwovenprodukte, Folie oder Papier.

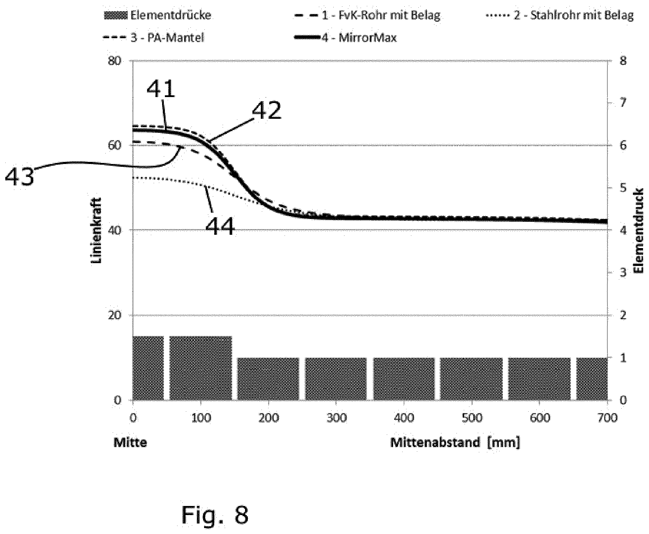

In der Figur 8 ist ein Diagramm gezeigt, in dem die Linienkraftverteilungen im Behandlungsspalt 3, insbesondere erzeugt durch die Walze 1 und eine entsprechende Gegenwalze 2, über die Walzenbreite, ausgehend von der Mitte in Längserstreckung, verschiedener Walzenmäntel einander gegenüber gestellt sind. Dabei ist in dem unteren Teil des Diagramms balkenweise die Verteilung des Drucks der Hydraulikflüssigkeit 13 auf die einzelnen Kammern 12 des Walzenträgers 10 in Längserstreckung von der Mitte der Walze 1 in Richtung des freien Endes der Walze 1 angegeben. Hierbei liegt vorliegend in einem Mittenbereich, im Diagramm links, ein gegenüber einem von der Mitte beabstandeten Bereich, im Diagramm mittig bis rechts, größerer Druck, insbesondere der 1,5 fache Druck der anderen Kammern 12, an. Die sich in einem mit dem jeweiligen Walzenmantel in dem Behandlungsspalt 3 einstellende Linienkraft ist oberhalb der Balken über die dargestellten Linien gezeigt. Hierbei entspricht die mit 41 gekennzeichnete Linie dem sich mit dem erfindungsgemäßen Walzenmantel 20 ergebenden Linienkraftverlauf, die Linie 42 dem Linienkraftverlauf, der sich mit einem aus dem Stand der Technik bekannten PA-Mantel ergibt, die Linie 43 dem Linienkraftverlauf, der sich mit einem aus dem Stand der Technik bekannten faserverstärkten Kunststoffrohr mit Belag ergibt, und die Linie 44 dem Linienkraftverlauf, der sich auf einem aus dem Stand der Technik bekannten Stahlrohr mit Belag einstellt.

Der zum Vergleich herangezogene PA-Mantel (Linie 42) weist dabei bei Raumtemperatur einen E-Modul von 1500 bis 4000 MPa, und bei einer Temperatur von 70°C einen E-Modul von 500 bis 1500 MPa auf. Das faserverstärkte Kunststoffrohr mit Belag (Linie 43) weist bei Raumtemperatur einen E-Modul in Längserstreckung von 6000 bis 10000 MPa auf. Der Belag eines Stahlrohrs (Linie 44) weist bei Raumtemperatur einen E-Modul von 3000 bis 5000 MPa, und bei einer Temperatur von 70°C einen E-Modul von 2500 bis 4500 MPa auf. Der erfindungsgemäße Walzenmantel 20 weist vorliegend bei Raumtemperatur einen E-Modul von 2000 bis 6000 MPa, und bei einer Temperatur von 70°C einen um maximal 1/3 reduzierten E-Modul auf.

Wie anhand der Figur 8 erkennbar ist hat sich gezeigt, dass die mittels einer Biegeausgleichswalze über die Längserstreckung der Walze unterschiedlich erzeugbaren Drücke mit dem erfindungsgemäßen Walzenmantel 20 ein sehr ähnlicher, besonders vorteilhafter Linienkraftverlauf im Behandlungsspalt 3 erzeugt werden kann, wie mit einem PA-Mantel, obwohl der erfindungsgemäße Walzenmantel 20 zur verbesserten selbsttragenden Eigenschaft eine diesem gegenüber weitaus größere Steifigkeit aufweist. Insbesondere zeigen der erfindungsgemäße Walzenmantel 20 und der zum Vergleich herangezogene PA-Mantel gegenüber den anderen vergleichenden Walzenmänteln eine größere Erhöhung der Linienkraft und einen steileren Übergang, welches für ein Nachfolgen der Walzenbiegung gemäß der an dem Walzenträger eingestellten Drücke besonders vorteilhaft ist. Somit bewirkt die bereits durch die homogene Art des Walzenmantels 20 erzeugte selbsttragende Eigenschaft des Mantelkörpers 21, dass ein separater Mantelträger 28 grundsätzlich nicht erforderlich ist. Ferner ist hierdurch hinsichtlich der Oberflächenbeschaffenheit des Walzenmantels 20 bewirkt, dass weder ein auf dem Mantelträger 28 aufgeschobener separater Mantel noch ein auf dem Mantelträger 28 aufgebrachter Belag erforderlich sind, sodass insbesondere die Herstellung- und Wartungskosten besonders gering sein können.

### Bezuaszeichenliste:

- 1: Walze
- 2: Gegenwalze
- 3: Behandlungsspalt
- 4: Warenbahn
- 10: Walzenträger
- 11: Querhaupt, Träger
- 12: Kammer
- 13: Hydraulikflüssigkeit
- 14a: Längsdichtung
- 14b: Querdichtung
- 15: Stempel
- 16: Rückzugstempel
- 17: Anlaufscheibe
- 17a: Lagerung
- 18: Fluidleitung
- 18a: Spindel
- 19: Walzenzapfen
- 20: Walzenmantel
- 21: Mantelkörper
- 22: Duroplast
- 23: Teilchen
- 23a: Fasern
- 23b: Partikel
- 24: Partikel-Kunststoff-Verbund
- 25: Walzenumfang
- 26: äußere Umfangsfläche
- 27: innere Umfangsfläche
- 28: Mantelträger
- 29: Schutzbeschichtung
- 30: Behandlungsvorrichtung
- 31: Aufnahmefassung
- 41: erfindungsgemäßer Walzenmantel
- 42: Walzenmantel, Polyamid-Mantel
- 43: Walzenmantel, faserverstärktes Kunststoffrohr mit Belag
- 44: Walzenmantel, Stahlrohr mit Belag
- 45a: Kolben
- 45b: Kolben

- A: Außendurchmesser
- D: Dicke

## Patentansprüche

1. Walze (1) zur Behandlung von Vlies-, Textil-, Kunststoff- oder Papierwarenbahnen, mit einem Walzenträger (10) und einem um den Walzenträger (10) rotierbaren Walzenmantel (20), wobei der Walzenmantel (20) eine den arbeitenden Walzenumfang (25) bildende äußere Umfangsfläche (26) und eine innere Umfangsfläche (27) aufweist, wobei der Walzenmantel (20) als ein einen duroplastischen Kunststoff (22) umfassender, homogener, selbsttragender Mantelkörper (21) und mit einem E-Modul in Längserstreckung des Mantelkörpers (21) bei Raumtemperatur von mindestens 2000 und maximal 8000 MPa ausgebildet ist, wobei der Walzenmantel (20) eine für einen Behandlungseffekt der Behandlung maßgebliche Oberflächengüte und eine für eine Stützfunktion der Walze (1) erforderliche Festigkeit aufweist, wobei homogen bedeutet, dass ein Werkstoff die für den Behandlungseffekt maßgebliche Oberflächengüte bildet und der gleiche Werkstoff die für die Stützfunktion erforderliche Festigkeit des Walzenmantels (20) bereitstellt
**dadurch gekennzeichnet, dass**
der Walzenmantel (20) eine Härte von 85 bis 95 °SHD aufweist und mit einem E-Modul in Längserstreckung des Mantelkörpers (21) bei einer Temperatur von 70°C von mindestens 1000 und maximal 6000 MPa ausgebildet ist.

2. Walze (1) nach Anspruch 1, **dadurch gekennzeichnet, dass** der Walzenmantel (20) einen E-Modul in Umfangsrichtung bei Raumtemperatur von mindestens 2250 und maximal 5000 MPa und bei einer Temperatur von 70°C von mindestens 1500 und maximal 4500 MPa aufweist.

3. Walze (1) nach Anspruch 1 oder 2, **dadurch gekennzeichnet, dass** die Dicke (D) des Walzenmantels mindestens 20 mm beträgt.

4. Walze (1) nach einem der Ansprüche 1 bis 3, **dadurch gekennzeichnet, dass** der Außendurchmesser (A) des Walzenmantels mindestens 250 mm und maximal 800 mm beträgt.

5. Walze (1) nach einem der Ansprüche 1 bis 4, **dadurch gekennzeichnet, dass** der Walzenmantel (20) einen E-Modul aufweist, der in alle Raumrichtungen gleich ist.

6. Walze (1) nach einem der voranstehenden Ansprüche, **dadurch gekennzeichnet, dass** der Walzenmantel (20) geeignet ist, bei einer Dauerbetriebstemperatur von mindestens 130°Cbetrieben zu werden.

7. Walze (1) nach einem der voranstehenden Ansprüche, **dadurch gekennzeichnet, dass** der Walzenmantel (20) zumindest an der äußeren Umfangsfläche (26) eine Oberflächenrauigkeit Ra von 0,2 bis 1,6 µm aufweist.

8. Walze (1) nach einem der voranstehenden Ansprüche, **dadurch gekennzeichnet, dass** der Walzenmantel (20) mittels eines Schleudergussverfahrens hergestellt ist.

9. Walze (1) nach einem der voranstehenden Ansprüche, **dadurch gekennzeichnet, dass** der Walzenmantel (20) lose auf einen eine Oberfläche aufweisenden Mantelträger (28) aufgeschoben ist.

10. Walze (1) nach Anspruch 9, **dadurch gekennzeichnet, dass** der Mantelträger (28) an seiner Oberfläche eine Schutzbeschichtung (29) aufweist, die elastischer als der Mantelkörper (21) ist.

11. Walze (1) nach einem der voranstehenden Ansprüche, **dadurch gekennzeichnet, dass** der duroplastische Kunststoff (22) auf Basis eines eine temperaturabhängige Viskosität aufweisenden Kunstharzes hergestellt ist.

12. Walze (1) nach Anspruch 11, **dadurch gekennzeichnet, dass** das Kunstharz eine Glasübergangstemperatur zwischen 100 und 200°C aufweist.

13. Walze (1) nach einem der voranstehenden Ansprüche, **dadurch gekennzeichnet, dass** der Walzenmantel (20) einen Teilchen-Kunststoff-Verbund (24) aufweist, umfassend den duroplastischen Kunststoff (22) und Füllstoff-und/oder Verstärkungsteilchen (23).

14. Walze (1) nach Anspruch 13, **dadurch gekennzeichnet, dass** die Füllstoff-und/oder Verstärkungsteilchen (23) langgestreckte, faserartige Teilchen (23a) mit einer Länge von jeweils weniger als 0,2mm umfassen.

15. Walze (1) nach einem der Ansprüche 13 oder 14, **dadurch gekennzeichnet, dass** die Füllstoff- und/oder Verstärkungsteilchen (23) Partikel (23b) mit einem Durchmesser von jeweils weniger als 0,05mm umfassen.

16. Walze (1) nach einem der Ansprüche 13 bis 15, **dadurch gekennzeichnet, dass** die Füllstoff- und/oder Verstärkungsteilchen (23) Partikel umfassen, welche plattenförmig ausgebildet sind.

17. Walze (1) nach einem der Ansprüche 13 bis 16, **dadurch gekennzeichnet, dass** die Füllstoff- und/oder Verstärkungsteilchen (23) mineralische Füllstoffe umfassen und in dem Walzenmantel (20) einen Anteil von 5 bis 40 Gewichts-Prozent gemessen am Gesamt-Gewicht bilden.

18. Walze (1) nach einem der Ansprüche 13 bis 17, **dadurch gekennzeichnet, dass** die Füllstoff- und/oder Verstärkungsteilchen (23) aus einer Zusammensetzung, umfassend Kalium und Aluminium, gebildet sind.

19. Walze (1) nach einem der voranstehenden Ansprüche, **dadurch gekennzeichnet, dass** die Walze (1) als eine Biegeausgleichswalze ausgebildet ist, und der Walzenmantel (20) an seiner inneren Umfangsfläche (27) zumindest in einem Teilbereich mit einem Druck beaufschlagbar ist.

20. Verfahren zur Herstellung einer Walze (1) mit den Merkmalen gemäß einem der voranstehenden Ansprüche, mit den folgenden sukzessiven Schritten:
- Schleudergießen eines flüssigen Kunststoffharzes in einer rohrförmigen Kokille zur Erzeugung eines den Walzenmantel (20) bildenden Rohrkörpers,
- Vernetzung des Kunstharzes durch Ultraviolett- und/oder Infrarot-Strahlung zu einem duroplastischen Kunststoff (22),
- Entnahme des Walzenmantels (20) aus der Kokille,
- erforderlichenfalls Bearbeiten zumindest der äußeren Umfangsfläche (26) zur Bildung einer Oberflächenrauigkeit Ra von 0,2 bis 1,6 µm
- loses Aufschieben des Walzenmantels (20) auf den Walzenträger (10) oder einen Mantelträger (28).

## Claims

1. Roller (1) for treating non-woven, textile, plastics or paper material webs, comprising a roller carrier (10) and a roller casing (20) which can rotate about the roller carrier (10), the roller casing (20) having an outer circumferential surface (26) forming the working roller circumference (25), and an inner circumferential surface (27), the roller casing (20) being designed as a homogeneous, self-supporting casing body (21) comprising thermosetting plastics material (22), and being formed with a modulus of elasticity in the longitudinal extension of the casing body (21) of at least 2,000 and at most 8,000 MPa at room temperature, the roller casing (20) having a surface quality that is essential for a treatment effect of the treatment and a strength required for a supporting function of the roller (1), with homogeneous meaning that a material forms the surface quality essential for the treatment effect and the same material provides the strength of the roller casing (20) required for the supporting function, **characterized in that** the roller casing (20) has a hardness of 85 to 95 °SHD and is formed with a modulus of elasticity in the longitudinal extension of the casing body (21) of at least 1,000 and at most 6,000 MPa at a temperature of 70°C.

2. Roller (1) according to claim 1, **characterized in that** the roller casing (20) has a modulus of elasticity in the circumferential direction of at least 2,250 and at most 5,000 MPa at room temperature, and of at least 1,500 and at most 4,500 MPa at a temperature of 70°C.

3. Roller (1) according to either claim 1 or claim 2, **characterized in that** the thickness (D) of the roller casing is at least 20 mm.

4. Roller (1) according to any of claims 1 to 3, **characterized in that** the outer diameter (A) of the roller casing is at least 250 mm and at most 800 mm.

5. Roller (1) according to any of claims 1 to 4, **characterized in that** the roller casing (20) has a modulus of elasticity which is the same in all spatial directions.

6. Roller (1) according to any of the preceding claims, **characterized in that** the roller casing (20) is suitable for operation at a continuous operating temperature of at least 130°C.

7. Roller (1) according to any of the preceding claims, **characterized in that** the roller casing (20), at least on the outer circumferential surface (26), has a surface roughness Ra of 0.2 to 1.6 µm.

8. Roller (1) according to any of the preceding claims, **characterized in that** the roller casing (20) is produced by means of a centrifugal casting process.

9. Roller (1) according to any of the preceding claims, **characterized in that** the roller casing (20) is loosely pushed onto a casing carrier (28) having a surface.

10. Roller (1) according to claim 9, **characterized in that** the casing carrier (28) has a protective coating on the surface (29) thereof, which coating is more elastic than the casing body (21).

11. Roller (1) according to any of the preceding claims, **characterized in that** the thermosetting plastics material (22) is produced based on a synthetic resin having a temperature-dependent viscosity.

12. Roller (1) according to claim 11, **characterized in that** the synthetic resin has a glass transition temperature between 100 and 200°C.

13. Roller (1) according to any of the preceding claims, **characterized in that** the roller casing (20) contains a particle-plastics composite (24) comprising the thermosetting plastics material (22) and filler and/or reinforcing particles (23).

14. Roller (1) according to claim 13, **characterized in that** the filler and/or reinforcing particles (23) comprise elongate, fiber-like particles (23a) having a length of less than 0.2 mm in each case.

15. Roller (1) according to either claim 13 or claim 14, **characterized in that** the filler and/or reinforcing particles (23) comprise particles (23b) having a diameter of less than 0.05 mm in each case.

16. Roller (1) according to any of claims 13 to 15, **characterized in that** the filler and/or reinforcing particles (23) comprise particles which are plate shaped.

17. Roller (1) according to any of claims 13 to 16, **characterized in that** the filler and/or reinforcing particles (23) comprise mineral fillers and, in the roller casing (20), form a proportion of 5 to 40 wt.%, measured at the total weight.

18. Roller (1) according to any of claims 13 to 17, **characterized in that** the filler and/or reinforcing particles (23) are formed from a composition comprising potassium and aluminum.

19. Roller (1) according to any of the preceding claims, **characterized in that** the roller (1) is designed as a bending compensation roller, and the roller casing (20) can be subjected to pressure on the inner circumferential surface (27) thereof, at least in a portion.

20. Method for producing a roller (1) having the features according to any of the preceding claims, comprising the following successive steps:
- centrifugal casting of a liquid plastics resin in a tubular mold to produce a tubular body which forms the roller casing (20),
- crosslinking the synthetic resin by means of ultraviolet and/or infrared radiation to form a thermosetting plastics material (22),
- removing the roller casing (20) from the mold,
- if necessary processing at least the outer circumferential surface (26) to form a surface roughness Ra of 0.2 to 1.6 µm,
- loosely sliding the roller casing (20) onto the roller carrier (10) or a casing carrier (28).

## Revendications

1. Rouleau (1) pour le traitement de bandes de non-tissé, de textile, de matière plastique ou de papier, comportant un support de rouleau (10) et une enveloppe de rouleau (20) pouvant tourner autour du support de rouleau (10), l'enveloppe de rouleau (20) présentant une surface circonférentielle extérieure (26) formant la circonférence de rouleau de travail (25) et une surface circonférentielle intérieure (27), l'enveloppe de rouleau (20) étant réalisée en tant que corps d'enveloppe (21) autoportant, homogène et comprenant une matière plastique thermodurcissable (22) et comportant un module d'élasticité dans l'extension longitudinale du corps d'enveloppe (21) à température ambiante d'au moins 2 000 et d'au plus 8 000 MPa, l'enveloppe de rouleau (20) présentant une qualité de surface fondamentale pour un effet de traitement du traitement et une résistance requise pour une fonction de support du rouleau (1), homogène signifiant qu'un matériau forme la qualité de surface fondamentale pour l'effet de traitement et que le même matériau fournit la résistance de l'enveloppe de rouleau (20) requise pour la fonction de support, **caractérisé en ce que** l'enveloppe de rouleau (20) présente une dureté de 85 à 95 °SHD et est réalisée avec un module d'élasticité dans l'extension longitudinale du corps d'enveloppe (21) à une température de 70 °C d'au moins 1 000 et d'au plus 6 000 MPa.

2. Rouleau (1) selon la revendication 1, **caractérisé en ce que** l'enveloppe de rouleau (20) présente un module d'élasticité dans la direction circonférentielle à température ambiante d'au moins 2 250 et d'au plus 5 000 MPa et à une température de 70 °C d'au moins 1 500 et d'au plus 4 500 MPa.

3. Rouleau (1) selon la revendication 1 ou 2, **caractérisé en ce que** l'épaisseur (D) de l'enveloppe de rouleau est d'au moins 20 mm.

4. Rouleau (1) selon l'une des revendications 1 à 3, **caractérisé en ce que** le diamètre extérieur (A) de l'enveloppe de rouleau est d'au moins 250 mm et d'au plus 800 mm.

5. Rouleau (1) selon l'une des revendications 1 à 4, **caractérisé en ce que** l'enveloppe de rouleau (20) présente un module d'élasticité qui est le même dans toutes les directions spatiales.

6. Rouleau (1) selon l'une des revendications précédentes,
**caractérisé en ce que** l'enveloppe de rouleau (20) est adaptée pour fonctionner à une température de fonctionnement continu d'au moins 130 °C.

7. Rouleau (1) selon l'une des revendications précédentes, **caractérisé en ce que** l'enveloppe de rouleau (20) présente, au moins sur la surface circonférentielle extérieure (26), une rugosité de surface Ra de 0,2 à 1,6 µm.

8. Rouleau (1) selon l'une des revendications précédentes,
**caractérisé en ce que** l'enveloppe de rouleau (20) est fabriquée au moyen d'un procédé de moulage par centrifugation.

9. Rouleau (1) selon l'une des revendications précédentes,
**caractérisé en ce que** l'enveloppe de rouleau (20) est poussée librement sur un support d'enveloppe (28) présentant une surface.

10. Rouleau (1) selon la revendication 9, **caractérisé en ce que** le support d'enveloppe (28) présente sur sa surface un revêtement de protection (29) qui est plus élastique que le corps d'enveloppe (21).

11. Rouleau (1) selon l'une des revendications précédentes,
**caractérisé en ce que** la matière plastique thermodurcissable (22) est fabriquée sur la base d'une résine synthétique présentant une viscosité dépendant de la température.

12. Rouleau (1) selon la revendication 11, **caractérisé en ce que** la résine synthétique présente une température de transition vitreuse comprise entre 100 et 200 °C.

13. Rouleau (1) selon l'une des revendications précédentes,
**caractérisé en ce que** l'enveloppe de rouleau (20) présente un composite particules-matière plastique (24) comprenant la matière plastique thermodurcissable (22) et des particules de charge et/ou de renforcement (23).

14. Rouleau (1) selon la revendication 13, **caractérisé en ce que** les particules de charge et/ou de renforcement (23) comprennent des particules fibreuses allongées (23a) comportant une longueur respectivement inférieure à 0,2 mm.

15. Rouleau (1) selon l'une des revendications 13 ou 14, **caractérisé en ce que** les particules de charge et/ou de renforcement (23) comprennent des particules (23b) comportant un diamètre respectivement inférieur à 0,05 mm.

16. Rouleau (1) selon l'une des revendications 13 à 15, **caractérisé en ce que** les particules de charge et/ou de renforcement (23) comprennent des particules en forme de plaque.

17. Rouleau (1) selon l'une des revendications 13 à 16, **caractérisé en ce que** les particules de charge et/ou de renforcement (23) comprennent des charges minérales et représentent une proportion de 5 à 40 pour cent en poids mesurée par rapport au poids total dans l'enveloppe de rouleau (20).

18. Rouleau (1) selon l'une des revendications 13 à 17, **caractérisé en ce que** les particules de charge et/ou de renforcement (23) sont formées à partir d'une composition comprenant du potassium et de l'aluminium.

19. Rouleau (1) selon l'une des revendications précédentes,
**caractérisé en ce que** le rouleau (1) est réalisé en tant que rouleau d'équilibrage de flexion et l'enveloppe de rouleau (20) peut être soumise à une pression sur sa surface circonférentielle intérieure (27) au moins dans une zone partielle.

20. Procédé de fabrication d'un rouleau (1) comportant les caractéristiques selon l'une des revendications précédentes, comportant les étapes successives suivantes :
- moulage par centrifugation d'une résine synthétique liquide dans une coquille tubulaire pour la production d'un corps tubulaire formant l'enveloppe de rouleau (20),
- réticulation de la résine synthétique par rayonnement ultraviolet et/ou infrarouge pour former une matière plastique thermodurcissable (22),
- retrait de l'enveloppe de rouleau (20) de la coquille,
- éventuellement, usinage au moins de la surface circonférentielle extérieure (26) pour obtenir une rugosité de surface Ra de 0,2 à 1,6 µm
- poussée de manière libre de l'enveloppe de rouleau (20) sur le support de rouleau (10) ou un support d'enveloppe (28).
